# EUROPEAN PATENT SPECIFICATION

(11) **EP 1 227 917 B1**
(45) Date of publication and mention of the grant of the patent: **21.04.2004**
(21) Application number: 00974222.2
(22) Date of filing: 10.11.2000
(51) Int. Cl.: B26F 1/00

(54) **DEVICE FOR CUTTING SLITS IN PLASTIC TUBES**
VORRICHTUNG ZUM SCHNEIDEN VON SCHLITZEN IN ROHRE AUS KUNSTSTOFF
DISPOSITIF DE DECOUPAGE DE FENTES DANS DES TUBES PLASTIQUES

(30) Priority: 12.11.1999 CA 2289386
(43) Date of publication of application: 07.08.2002
(73) Proprietor: Lupke, Manfred Arno Alfred, Thornhill Ontario L3T 1W6 (CA); Lupke, Stefan A., Thornhill, Ontario L3T 1X6 (CA)
(72) Inventor: Lupke, Manfred Arno Alfred, Thornhill Ontario L3T 1W6 (CA); Lupke, Stefan A., Thornhill, Ontario L3T 1X6 (CA)
(74) Representative: Otten, Hajo, Dr.-Ing.
(86) International application number: PCT/CA2000/001320
(87) International publication number: WO 2001/036167

(56) References cited:
- EP-A- 0 599 685
- EP-A- 0 644 008
- EP-A- 0 795 383
- WO-A-98/22264
- US-A- 3 821 912
- US-A- 3 957 386
- US-A- 5 381 711

## Description

### FIELD OF THE INVENTION

The present invention relates to a tube cutting device for perforating tubing such as profiled drainage tubing.

### BACKGROUND OF THE INVENTION

In some uses of plastic pipe, it is a requirement that the pipe be perforated. In one example only, underground profiled drainage pipe is provided with small cuts or slits spaced from one another around the troughs of the profiled pipe.

In the past, different devices have been either used or proposed for perforating such pipe. United States Patent 4,180,357 and 4,218,164 both issued to Gerd Lupke disclose tube perforating devices in the form of a plurality of screw-like cutters rotatably mounted on fixed shafts around a center bore through which tubing is passed for perforation by the screw-like members. Although the devices in both of these patents are very efficient in operation, they are not easily adjusted for different tube diameters.

United States Patents 5,381,711 and 5,385,073 both owned by Truemner et al, disclose tube perforators having driver cutter wheels supported by drive shafts at different positions around the perforators. According to both of these patents the drive shafts are at an angle, i.e. not parallel to the axis of the tube passed through the perforator. The angling of the drive shafts produces a tipping of the cutter wheels which, according to each of the patents, helps keep the wheels in the troughs of the tube and to accommodate very minor fluctuations in the tubing. In addition, according to each of these patents the driver cutter wheels are inter-changeable with other driver cutter wheels to accommodate more substantial variances in the tubing such as for example, tubing of different diameters.

The preamble of Claim 1 is based upon US-A-5,381,711.

### SUMMARY OF THE PRESENT INVENTION

The present invention provides a tube cutting device which very quickly and easily adjusts for variances in tubing passing through the device whether those variances be as a result of different sizes of tubing or whether they be as a result of for example different tube sections such as coupling sections produced in the tubing which should not be cut.

The invention is defined in claim 1.

In accordance with the present invention, the rotatable members are adjustable radially of the tube passage for accommodating diametric variances in the tubing passed through the device.

According to an aspect of the present invention a plurality of the tube cutters and in some cases all of the rotatable tube cutter members are responsive to a single controller which produces simultaneous uniform radial adjustment of all of the members.

### BRIEF DESCRIPTION OF THE DRAWINGS

The above as well as other advantages and features of the present invention will be described in greater detail according to the preferred embodiments of the present invention in which;
Figure 1 is a sectional view through a tube cutting device according to a preferred embodiment of the present invention;
Figure 2 is an enlarged sectional view of one of the individual tube cutting stations from the device of Figure 1;
Figure 3 is a sectional view of a tube cutting device, which is shown for illustration, of a mechanism of radical adjustment.

### DETAILED DESCRIPTION ACCORDING TO THE PREFERRED EMBODIMENTS OF THE PRESENT INVENTION IN WHICH:

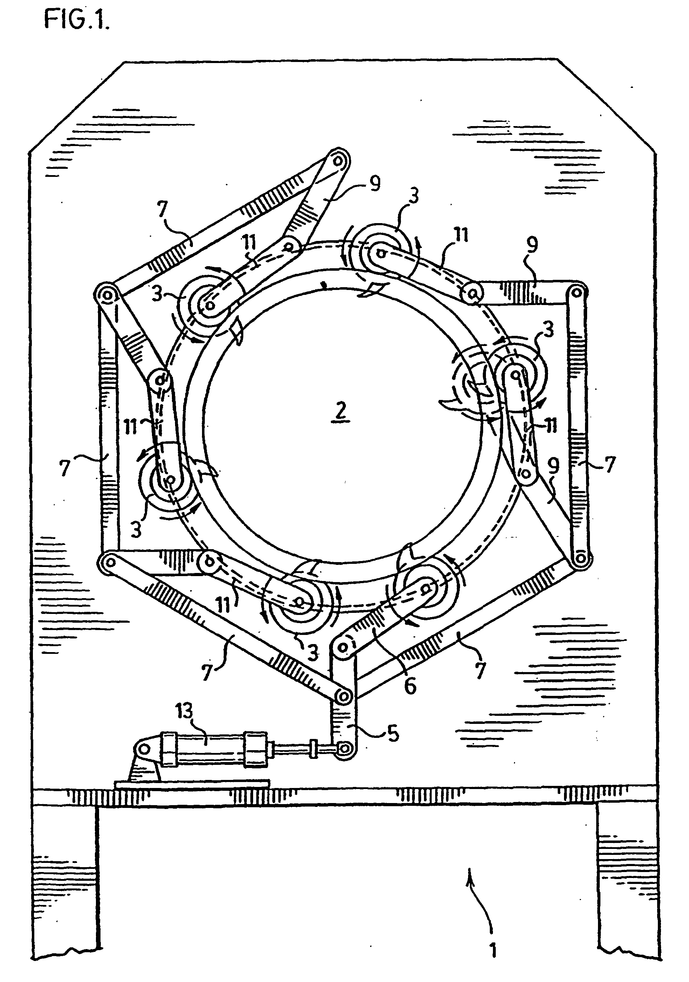

Figure 1 shows a cutting device generally indicated at 1 for cutting tubing and in this case profiled plastic tubing passed through the device. The tube cutting device includes a plurality of individual cutting stations 3 at circumferentially spaced positions around a central tube passage or bore 2 through the device.

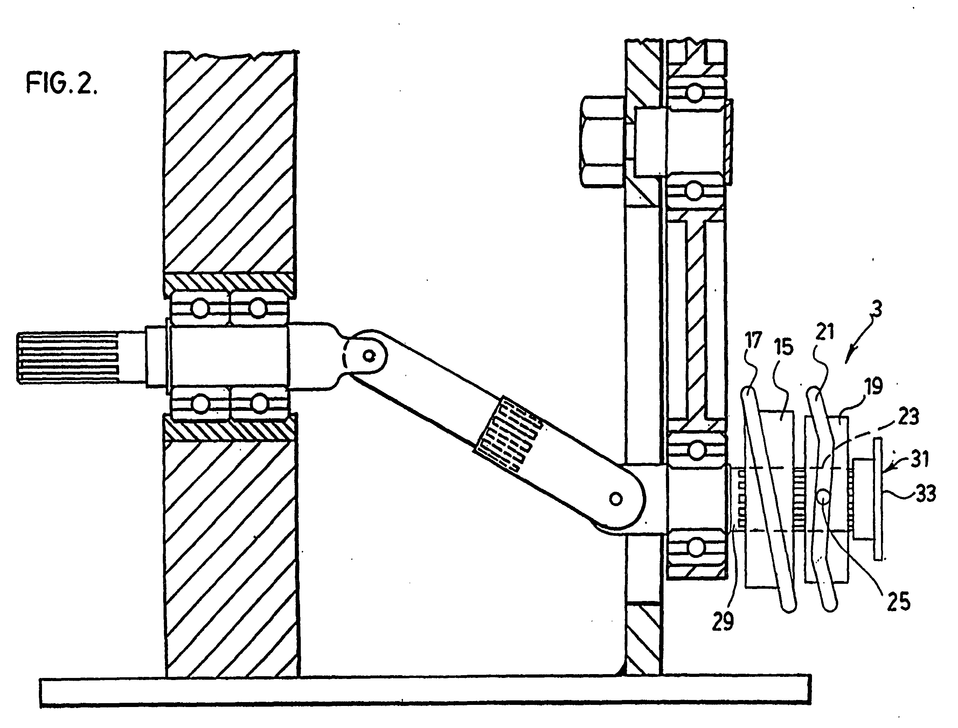

The details of each of the tube cutting stations 3 are better shown in Figure 2 of the drawings and will be described later in detail.

Returning to Figure 1 the key to the present invention lies in the radial adjustability of each of the cutting stations 3. In the particular example shown, this adjustability is provided through a mechanical linkage system comprising a plurality of levers pivotally interconnected to one another.

More particularly, the linkage system comprises a main or master lever 5 which, through a single movement of this lever controls a plurality of slave levers to produce simultaneous uniform radial adjustment of each of the cutting stations. These slave levers comprise slave lever 6 which is pivotally connected to the interior end of master or main lever 5 and a further plurality of slave levers 7 outwardly around the device. As can be seen in Figure 1, two of these slave levers pivotally connect centrally of the master lever 5.

Further slave levers 9 pivotally connect to the ends of the levers 7 and these slave levers 9 then pivotally connect to slave levers 11 which rotably support each of the cutting stations 3. The one minor difference in the overall set up is found where slave lever 6 which as noted above is pivotally connected to the interior end of master lever 5 is used to support the cutting station 3a. The actual construction of cutting station 3a is identical to the cutting stations 3.

Master lever 5 is pivotally connected at its outer end to a reciprocating plunger 13.

Movement of the plunger in one direction, i.e. outward extension of the plunger, acts directly on the master lever which in turn causes movement of all of the slave levers to pull each of the cutting stations outwardly from the position shown in Figure 1. The degree of extension on the plunger dictates the degree of movement of the cutting stations. For example, the plunger can be extended sufficiently far to pull the cutting stations completely away from the center bore 2 which would allow something as large as a coupling section of the tube to pass through the device without coming into contact with the cutting stations. The cutters can also be pulled outwardly to cut larger diameter tubing.

If it is desired to pull each of the cutting stations radially inwardly from the Figure 1 position to cut for example smaller diameter tubing, again a single movement of plunger 13, i.e. retraction of the plunger produces uniform inward adjustment of the cutting stations through the master and slave levers of the linkage system.

As noted above, one of the individual cutting stations 3 is well shown in Figure 2 of the drawings. This cutting station comprises both a means for driving the tube through the device as well as a means for cutting the tube. This concept is similar to that disclosed in the two earlier Lupke patents although the actual construction of cutter station 3 is novel to the present invention.

More particularly, cutting station 3 comprises a first disk like member 15 having a thread 17 on an exterior surface of the disk. A second disk-like member 19 is located in a downstream position relative to the first disk like member. The exterior surface of disk 19 is provided with a helical thread portion 21 which wraps partially around the disk. This helical thread portion 21 is intersected by a rib portion 23 supporting the actual tube cutter 25.

As well shown in Figure 2 of the drawings, rib portion 23 is straight rather than having the helical configuration of the thread 21. Accordingly, the rib lies at 90° to the axis of the tubing passing through the device and the cut produced by cutter 25 is produced in the same direction.

Disk members 15 and 19 are mounted on a common rotating support 29. The disk 15 is fixed while the disk 19 is movable longitudinally of that support. As such, disk 15 and specifically the thread 17 on this fixed disk engages within the troughs of the profiled pipe and the rotation of the disk, because of the pitch on the thread pushes the pipe through the device.

At the same time, the thread 21 on the disk 19 also engages in the troughs of the pipe. However, because of its movable feature, this disk will slide in a downstream direction on support 29 as it is rotated by the thread meshing with the pipe.

The disk 19 will rotate into position such that the flat rib 23 and the cutter 25 supported by the rib moves into the trough. As a result of the disk moving with the pipe, the cutter will perform the desired right angle cut without any resistance to the pipe movement through the device.

Once the rib 25 has cleared from the trough with the rotation of disk 19 to complete the pipe cut in this particular area, disk 19 will return in a downstream position adjacent disk 15 to perform a new cutting operation on the next trough presented to it. This occurs as a result of two things. Firstly, a spring 31 is provided on the downstream end of disk 19 and this spring is trapped in position by means of an end stop 31 on support 29. This end stop holds the entire assembly together.

Secondly, the pitch of thread 21 on disk 19 is such that after the cut has been made, disk 19 threads itself under the influence of spring 31 back towards disk 19 as it engages within the next trough of the pipe. This action is again similar to that described in United States Patent 4,218,164.

As is also described in both United States Patents 4,180,357 and 4,218,164 all of the cutting stations 3 may be rotated at the same time by a single drive belt for all of the cutting stations. This drive belt will wrap in opposite directions around adjacent rotatable supports of the cutting stations to drive the adjacent stations in opposite directions preventing tube rotation within the device. Additional means such as a soft tube grip may also be provided to help hold the tube against rotation while it is being cut.

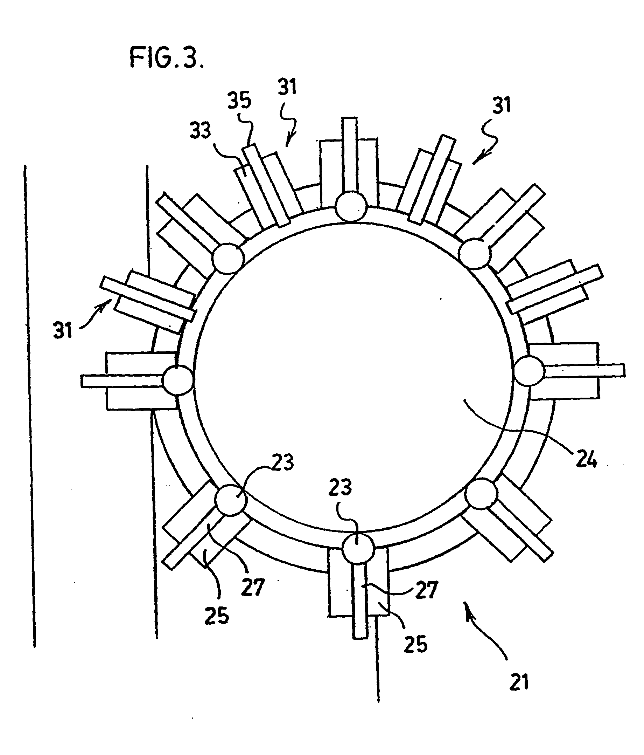

Figure 3 of the drawings shows a modified tube cutting device generally indicated at 21. This device includes a plurality of rotary tube cutting stations 23 at circumferentially spaced locations around a center tube passage 24 through the device.

In this particular case the tube cutters 23 rather than being radially adjustable by a pivotal linkage system move in and out relative to passage 24 by a radially directed slide adjustment. In particular each of the cutters 23 is rotably supported on a mount or bar 27 supported by a frame 25. The bar 27 slides in and out of the frame for the radial adjustment of the tube cutters.

In the device shown in Figure 3, operation of the slide system is controlled by an electronic controller 29. This controller is fed impulses by sensing means on the surface of the tubing which feed information to the controller for its operation.

For example, the sensors would pick up the approach of a large diameter tube region such as a coupling whereby the controller would cause the tube cutters to pull outwardly away from the cutting position thereby allowing the coupling section to pass through the device. Similar sensors could be used to operate the mechanical control system earlier described.

Again, with the device of Figure 3, like the device of Figure 1 all of the cutters may be adjusted simultaneously and uniformly with one another.

According to another aspect of the invention, it would only be required to move some of the cutters into a cutting position while either retracting or holding the other cutters away form the cutting position. For instance, it may only be required to cut the bottom portion of the tube. This can also be accomplished using cutting device 21 where the control would cause the cutters in the top part of the device to move radially outwardly from the cutting position. The cutters in the lower part of the device would not be moved.

Also for this situation, means are provided to prevent pipe rotation which would otherwise occur because of the imbalance in the cutting area. These means are in the form of tube grips 3 which include a housing 33 and a soft tip plunger 35 which is moved radially inwardly against the tube to hold it against rotation.

Although a preferred embodiment of the present invention have been described in detail, it will be appreciated by those skilled in the art that variations may be made without departing from the scope of the appended claims.

## Claims

1. A tube cutting device (1) for producing a plurality of cuts around tubing having a profiled exterior surface which is passed through the device, said device including a plurality of cutting stations (3) located at different circumferential positions around a tube passage (2) through said device, each cutting station including a rotatable member (19) provided with a tube cutter (25) which is directed at and away from the tube passage with rotation of each rotatable member and each cutting station (3) being adjustable radially of the tube passage to accommodate tube diameter variances, the device being **characterized in that** each of said rotatable members (19) is individually slidable axially of the device to move with the tubing while said tube cutters (25) produce the cuts in the tubing.

2. A tube cutting device as claimed in Claim 1 **characterized in that** each tube cutter (25) is orientated at 90 degrees to said tube passage in any position to which each cutting station (3) is adjusted.

3. A tube cutting device as claimed in Claim 2 **characterized in that** each of said cutting stations (3) further includes a threaded member (15) fixed on a power driven rotary shaft (29) to assist in pushing the tubing through said tube cutting device.

4. A tube cutting device as claimed in Claim 3 **characterized in that** each rotatable member (19) provided with said tube cutter (25) is slidably mounted on said power driven shaft (29), each rotatable member (19) having a thread (21) engaged with the profiled exterior surface of the tubing such that each rotatable member (19) is rotated by engagement with the profiled exterior surface of the tubing for directing the tube cutter (25) at and away from the tube passage (2) with rotation of the rotatable member (19).

5. A tube cutting device as claimed in Claim 4 **characterized in that** said shaft (29) with threaded member (15) fixed thereon is part of each cutting station (3) and adjustable with the cutting station to different radial positions relative to the tube passage to enable said device to cut tubing of various different diameters without replacement of the tube cutters (25).

6. A tube cutting device as claimed in Claim 1 **characterized in that** the cutting stations (3) with the tube cutters (25) of said device are adjustable radially of the tube passage (2) to accommodate diameter variances in a single tube and to also accommodate tubes of different diameters without replacement of the tube cutters (25).

7. A tube cutting device as claimed in Claim 6 **characterized by** tube sensors which automatically produce radial adjustment of the cutting stations (3) which are provided with the tube cutters (25) for the diameter variances in a single tube.

8. A tube cutting device as claimed in Claim 7 **characterized in that** said cutting station (3) provided with the tube cutters (25) adjust radially outwardly sufficiently far in response to said tube sensors to move away from and avoid cutting of couplings in any single tube passing through said device.

9. A tube cutting device as claimed in Claim 1 **characterized by** tube gripping means to prevent tube rotation while said rotatable members (19) provided with the tube cutters (25) are in operation.

10. A tube cutting device as claimed in Claim 1 **characterized in that** all of said cutting stations (3) are adjustable in unison with one another.

11. A tube cutting device as claimed in Claim 1 including control means which produces simultaneous uniform radial adjustment of a plurality of said cutting stations (3) **characterized in that** said control means comprising a mechanical linkage system including a main lever (5) and a plurality of slave levers (6, 7, 9, 11) pivotally secured to one another, said tube cutters being supported by said slave levers which all pivot in unison with one another through a single adjustment of said main lever.

12. A tube cutting device as claimed in Claim 11 **characterized in that** said main lever is operated by a reciprocating plunger (13).

## Patentansprüche

1. Rohrschneidvorrichtung (1) zum Erzeugen einer Vielzahl von Schnitten um einen Rohrstrang mit einer profilierten äußeren Oberfläche herum, der durch die Vorrichtung geleitet wird, wobei die Vorrichtung eine Vielzahl von Schneidstationen (3) aufweist, die sich bei unterschiedlichen umfänglichen Positionen um einen durch die Vorrichtung verlaufenden Rohrdurchgang (2) herum befinden, wobei jede Schneidstation ein rotierbares Element (19) umfasst, das mit einem Rohrschneider (25) versehen ist, der bei Rotation jedes rotierbaren Elements zum Rohrdurchgang hin und vom Rohrdurchgang weg geleitet ist, und wobei jede Schneidstation (3) radial zu dem Rohrdurchgang verstellbar ist, um Veränderungen im Rohrdurchmesser zu entsprechen, wobei die Vorrichtung **dadurch gekennzeichnet ist, dass** jedes der rotierbaren Elemente (19) individuell axial verschieblich zur Vorrichtung ist, um sich mit dem Rohrstrang zu bewegen, während die Rohrschneider (25) die Schnitte im Rohrstrang erzeugen.

2. Rohrschneidvorrichtung gemäß Anspruch 1, **dadurch gekennzeichnet, dass** jeder Rohrschneider (25) bei jeder Position, in die jede Schneidstation (3) verstellbar ist, unter 90 Grad zu dem Rohrdurchgang ausgerichtet ist.

3. Rohrschneidvorrichtung gemäß Anspruch 2, **dadurch gekennzeichnet, dass** jede der Schneidstationen (3) des Weiteren ein mit einem Gewinde versehenes Element (15) umfasst, das an einer kraftbetriebenen rotierenden Welle (29) befestigt ist, um ein Durchschieben des Rohrstrangs durch die Rohrschneidvorrichtung zu unterstützen.

4. Rohrschneidvorrichtung gemäß Anspruch 3, **dadurch gekennzeichnet, dass** jedes rotierbare Element (19), das mit dem Rohrschneider (25) versehen ist, verschieblich an der kraftgetriebenen Welle (29) angebracht ist, wobei jedes rotierbare Element (19) ein Gewinde (21) aufweist, das im Eingriff mit der profilierten äußeren Oberfläche des Rohrstrangs ist, so dass jedes rotierbare Element (19) mittels Eingriff mit der profilierten äußeren Oberfläche des Rohrstrangs rotiert wird, um den Rohrschneider (25) bei Rotation des rotierbaren Elements (19) in Richtung des Rohrdurchgangs (2) und vom Rohrdurchgang (2) weg zu leiten.

5. Rohrschneidvorrichtung gemäß Anspruch 4, **dadurch gekennzeichnet, dass** die Welle (29) mit dem daran angebrachten Element (15) mit Gewinde Teil jeder Schneidstation (3) ist und mit der Schneidstation in verschiedene radiale Positionen relativ zu dem Rohrdurchgang verstellbar ist, um es der Vorrichtung zu ermöglichen, Rohrstränge mehrerer verschiedener Durchmesser ohne Austausch der Rohrschneider (25) zu schneiden.

6. Rohrschneidvorrichtung gemäß Anspruch 1, **dadurch gekennzeichnet, dass** die Schneidstationen (3) mit den Rohrschneidern (25) der Vorrichtung radial zu dem Rohrdurchgang (2) verstellbar sind, um Veränderungen im Durchmesser bei einem einzigen Rohr zu entsprechen und um auch Rohren verschiedener Durchmesser ohne Austausch der Rohrschneider (25) zu entsprechen.

7. Rohrschneidvorrichtung gemäß Anspruch 6, **gekennzeichnet durch** Rohrsensoren, die automatisch eine radiale Verstellung der Schneidstationen (3), die mit den Rohrschneidern (25) versehen sind, für die Veränderungen im Durchmesser bei einem einzigen Rohr erzeugen.

8. Rohrschneidvorrichtung gemäß Anspruch 7, **dadurch gekennzeichnet, dass** die Schneidstation (3), die mit den Rohrschneidern (25) versehen ist, sich ausreichend weit radial nach außen in Abhängigkeit von den Rohrsensoren verstellt, um sich von Muffen wegzubewegen und ein Schneiden von Muffen bei jedem einzelnen Rohr zu vermeiden, das durch die Vorrichtung geleitet wird.

9. Rohrschneidvorrichtung gemäß Anspruch 1, **gekennzeichnet durch** Rohrgreifmittel, um eine Rohrrotation zu verhindern, während die rotierbaren Elemente (19), die mit den Rohrschneidern (25) versehen sind, in Betrieb sind.

10. Rohrschneidvorrichtung gemäß Anspruch 1, **dadurch gekennzeichnet, dass** alle Schneidstationen (3) im Einklang miteinander verstellbar sind.

11. Rohrschneidvorrichtung gemäß Anspruch 1, die Steuermittel umfasst, die eine simultane einheitliche radiale Verstellung einer Vielzahl der Schneidstationen (3) erzeugen, **dadurch gekennzeichnet, dass** die Steuermittel ein mechanisches Verbindungssystem aufweisen, das einen Hauptarm (5) und eine Vielzahl von Nebenarmen (6, 7, 9, 11) umfasst, die schwenkbar miteinander verbunden sind, wobei die Rohrschneider von den Nebenarmen getragen werden, die alle im Einklang miteinander durch eine einzelne Verstellung des Hauptarms drehen.

12. Rohrschneidvorrichtung gemäß Anspruch 11, **dadurch gekennzeichnet, dass** der Hauptarm mittels eines sich hin- und herbewegenden Kolbens (13) angetrieben wird.

## Revendications

1. Dispositif de coupe (1) de tube pour produire une pluralité de coupes autour des tubes ayant une surface extérieure profilée qui passe à travers le dispositif, ledit dispositif comprenant une pluralité de stations de coupe (3) situées à différentes positions circonférentielles autour d'un passage de tube (2) à travers ledit dispositif, chaque station de coupe comprenant un élément rotatif (19) prévu avec un instrument de coupe de tube (25) qui est dirigé au niveau de et à distance du passage de tube avec la rotation de chaque élément rotatif, et chaque station de coupe (3) étant réglable radialement par rapport au passage du tube pour accepter des variations de diamètre de tube, le dispositif étant **caractérisé en ce que** chacun desdits éléments rotatifs (16) peut individuellement coulisser de manière axiale par rapport au dispositif pour se déplacer avec les tubes, alors que lesdits instruments de coupe de tube (25) produisent les coupes dans les tubes.

2. Dispositif de coupe de tube selon la revendication 1, **caractérisé en ce que** chaque instrument de coupe de tube (25) est orienté à 90° dudit passage de tube dans n'importe quelle position à laquelle chaque station de coupe (3) est réglée.

3. Dispositif de coupe de tube selon la revendication 2, **caractérisé en ce que** chacune desdites stations de coupe (3) comprend en outre un élément fileté (15) fixé sur un arbre rotatif motorisé (29) pour assister la poussée du tube à travers ledit dispositif de coupe de tube.

4. Dispositif de coupe de tube selon la revendication 3, **caractérisé en ce que** chaque élément rotatif (19) prévu avec ledit instrument de coupe de tube (25) est monté de manière coulissante sur ledit arbre motorisé (29), chaque élément rotatif (19) étant doté d'un filetage (21) mis en prise avec la surface extérieure profilée des tubes de sorte que chaque élément rotatif (19) est entraîné en rotation par la mise en prise avec la surface extérieure profilée du tubage pour diriger l'instrument de coupe de tube (25) au niveau de et à distance du passage de tube (2) avec la rotation de l'élément rotatif (19).

5. Dispositif de coupe de tube selon la revendication 4, **caractérisé en ce que** ledit arbre (29) avec l'élément fileté (15) fixé sur celui-ci fait partie de chaque station de coupe (3) et est réglable avec la station de coupe à différentes positions radiales par rapport au passage de tube pour permettre audit dispositif de couper le tubage de différents diamètres sans remplacer les instruments de coupe de tube (25).

6. Dispositif de coupe de tube selon la revendication 1, **caractérisé en ce que** les stations de coupe (3) avec les instruments de coupe de tube (25) dudit dispositif sont réglables de manière radiale par rapport au passage de tube (2) pour accepter les variations de diamètre dans un seul tube et également pour loger les tubes de différents diamètres sans remplacer les instruments de coupe de tube (25).

7. Dispositif de coupe de tube selon la revendication 6, **caractérisé en ce qu'**il comprend des capteurs de tube qui produisent automatiquement le réglage radial des stations de coupe (3) qui sont prévues avec les instruments de coupe de tube (25) pour les variations de diamètre dans un seul tube.

8. Dispositif de coupe de tube selon la revendication 7, **caractérisé en ce que** ladite station de coupe (3) prévue avec les instruments de coupe de tube (25) se règle radialement vers l'extérieur suffisamment à distance, en réponse desdits capteurs de tube pour s'éloigner et éviter la coupe des couplages dans n'importe quel tube individuel qui passe à travers ledit dispositif.

9. Dispositif de coupe de tube selon la revendication 1, **caractérisé en ce qu'**il comprend des moyens de préhension de tube pour empêcher la rotation du tube alors que lesdits éléments rotatifs (19) prévus avec les instruments de coupe de tube (25) sont en fonctionnement.

10. Dispositif de coupe de tube selon la revendication 1, **caractérisé en ce que** toutes les stations de coupe (3) sont réglables à l'unisson les unes avec les autres.

11. Dispositif de coupe de tube selon la revendication 1 comprenant des moyens de commande qui produisent un réglage radial uniforme simultané d'une pluralité desdites stations de coupe (3), **caractérisé en ce que** lesdits moyens de commande comprenent un système de liaison mécanique comprenant un levier principal (5) et une pluralité de leviers secondaires (6, 7, 9, 11) fixés de manière pivotante entre eux, lesdits instruments de coupe de tube étant supportés par lesdits leviers secondaires qui pivotent tous à l'unisson les uns avec les autres par le biais d'un seul réglage dudit levier principal.

12. Dispositif de coupe de tube selon la revendication 11, **caractérisé en ce que** ledit levier principal est actionné par un piston (13) effectuant un mouvement de va et vient.
